# EUROPEAN PATENT APPLICATION

(11) **EP 0 684 407 A2**
(43) Date of publication of application: **29.11.1995**
(21) Application number: 95201394.4
(22) Date of filing: 29.05.1995
(51) Int. Cl.: F16H 25/20

(54) **Force amplifier with screw mechanism**

(30) Priority: 27.05.1994 NL 9400870
(71) Applicant: Wulffers, Christiaan Arnoldus, NL-1722 DK Zuid Scharwoude (NL)
(72) Inventor: Wulffers, Christiaan Arnoldus, NL-1722 DK Zuid Scharwoude (NL)
(74) Representative: Kupecz, Arpad

(57) **Abstract**

A transmission apparatus for converting a converting an actuating force into a greater working force, comprising elongated flexible tension means (7) which engage a rod-shaped member (1) through a transmission. The rod-shaped member (1) is formed as a ball lead screw (1), mounted rotatably around the longitudinal axis and provided with a nut (2). The tension means (7) on both sides of the nut (2) are wound into the free helices (8) of the lead screw (1), said free helices (8) and the nut (2) functioning as a transmission, and are guided adjacent to or within the nut, into and out of the helices (8), respectively, in such a way, that it can be subjected to a tensile force.

## Description

The invention relates to a transmission apparatus for converting an actuating force into a greater working force, comprising elongated flexible tension means which engage a rod-shaped member through a transmission.

In one known transmission apparatus of this type, which is intended for adjusting the side stays of a sailing boat, the transmission consists of a pulley system in which the tensile means in the form of a cord are led over pulleys. In this case, one fixed shaft having four pulleys and one movable shaft also having four pulleys are used, which movable shaft is connected with the rod-shaped member. The transmission ratio is determined by the number of loops in the pulley system.

This known transmission apparatus has the disadvantage that the transmission ratio is limited in practice and cannot become much greater than 1:8 without becoming unpractically large and without the internal friction being increased considerably. Further, it is a disadvantage that the apparatus can only exert a tensile force, without being able to absorb pressure.

It is now the objective of the invention to provide a transmission apparatus of the type mentioned in the introduction, whereby the above disadvantages are effectively eliminated.

To this end, the transmission apparatus according to the invention is characterized in that the rod-shaped member is formed as a ball lead screw, mounted rotatably around the longitudinal axis and provided with a nut, the tension means on both sides of the nut being wound into the free helices of the lead screw, said free helices and the nut functioning as a transmission, and being guided adjacent to or within the nut, into and out of the helices, respectively, in such a way, that it can be subjected to a tensile force.

The transmission apparatus according to the invention with a ball lead screw offers great advantages. Firstly, a great variety of transmission ratios is possible, whereby ratios up to about 1:50 can be realized without any problems. The apparatus is able to absorb both tension and pressure, especially if the lead screw is self-locking. By choosing a suitable material, friction can be kept low. Further, two or more transmission apparatuses can be coupled with the aid of the tensile means, so that a number of transmission apparatuses can be operated synchronously.

Advantageously, the nut is fixedly mounted, the nut and a part of the ball lead screw that is situated on one side of the nut being preferably accommodated in a housing having an inlet and an outlet hole for the tension means.

In this way a compact whole is formed, in which the nut is fixedly connected to the housing, and the lead screw connected with the part to be moved can be adjusted by moving it into and out of the housing by operating the tensile means.

Advantageously, the tension means on both sides of the nut are connected to each other and consist of, for example, a single cord, rope, cable or chain or the like.

In this embodiment, there will always be a loop of a fixed length outside of the ball lead screw, as a result of which the operation thereof is easy and no undesirable pieces of cord or the like of variable length extend from the housing.

A favourable embodiment of the transmission apparatus according to the invention is characterized in that the nut has a rectangular, in particular square, external circumference, while a ball return duct of the ball circulation nut is accommodated in a corner of the nut.

The rectangular square, in particular square, embodiment of the nut provides space for the ball return duct, without requiring a substantial increase of the external dimensions of the transmission apparatus.

The ball return duct is preferably composed of helical springs or the like, forming bends, and by tubes connecting to them. The helical springs provide gradual bends, while at least one tube can easily be introduced into and removed from a helical spring in order to introduce or remove balls.

Another variant of the invention provides a transmission apparatus for converting an actuating force into a greater working force, comprising a ball lead screw provided with a nut, and a drive for bringing these in rotation with respect to each other, which is characterized in that a ball circulating body is provided between the nut and the ball lead screw, having ball helices on both the internal and the external circumference, respectively for cooperation with the internal lead screw and the external nut through balls, said ball circulating body comprising ball connecting ducts for guiding the balls between the internal and external helices, one of said external nut and lead screw being secured against translation and the other against rotation.

This embodiment of the transmission apparatus according to the invention allows very high transmission ratios to be realized without any problems, and the transmission apparatus is a workable alternative for pneumatic and hydraulic cylinders.

The invention will hereinafter be explained with reference to the drawings which schematically represent the exemplary embodiments of the invention.

Fig. 1 is a perspective view of the exemplary embodiment of the transmission apparatus according to the invention.

Fig. 2 is a partially cut-away and enlarged side view of the transmission apparatus of fig. 1.

Fig. 3 is an enlarged section of the nut according to the line III-III in fig. 4.

Fig. 4 is a section according to the line IV-IV in fig. 3.

Fig. 5 is a partial longitudinal section of a second exemplary embodiment of the transmission apparatus according to the invention.

Fig. 6 is an enlarged representation of the ball circulating body of the subject of fig. 5.

Fig. 7 is a section according to the line VII-VII in fig. 6.

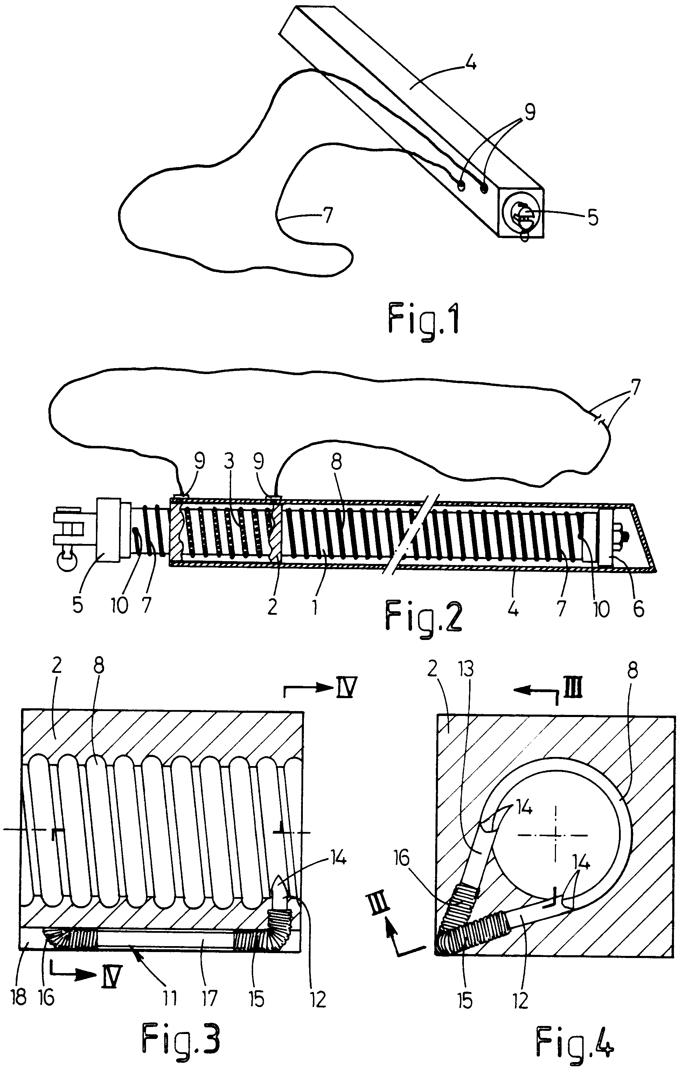

The first exemplary embodiment of the transmission apparatus according to the invention is, as represented in fig. 1-4, designed to produce a linear displacement of a coupled part. As fig. 1 and 2 show, the transmission apparatus comprises a ball lead screw 1 that cooperates with a nut 2 through balls 3. The nut 2 is fixedly mounted in an elongated case or housing 4 with a square section. The nut 2 is mounted at one end of the housing 4 and the ball lead screw 1 projects from the housing 4 with a variable length at the site of the nut 2. The ball lead screw 1 can be rotatably coupled to a part to be adjusted by means of a rotatable head 5. At the opposite end, the lead screw 1 is rotatably supported in a slide block 6 by means of a bearing, not represented.

In order to drive the ball lead screw 1 with respect to the nut 2, tension means in the form of a cord 7 are provided, said cord 7 being wound into the free helices 8 of the lead screw 1 that are not occupied by the balls 3 of the nut 2, on both sides of the nut 2. To this end, both the nut 2 and the housing 4 are provided with inlet and outlet holes 9 for leading the cord 7 into and out of the lead screw 1, respectively. The cord 7 is connected at both free ends to the lead screw 1, for example by means of a screw 10. Since the tension means on both sides of the nut 2 consist of a single cord, the cord loop outside of the housing 4 has a fixed length.

In order to adjust the lead screw, one end of the loop of the cord 7 is pulled, as a result of which the cord is pulled out of the helix 8 on the side of the nut concerned, and the cord 7 on the side of the nut 2 concerned is unwound from the ball lead screw 1 by turning the ball lead screw 1. As a result of this, the lead screw 1 is displaced with respect to the nut 2, whereby the ball lead screw 1 is turned into or out of the nut 2 and the housing 4, respectively. By turning the ball lead screw 1, the cord will be pulled into the helix 8 of the ball lead screw 1 on the other side of the nut 2, as a result of with the cord will be wound thereon. The cord 7 thus follows, as it were, the movement of the lead screw 1 with respect to the nut 2 and the length of the cord 7 wound on the lead screw 1 remains the same, so that only the ratio of the lengths of cord wound on both sides of the nut changes. The available cord loop length outside of the housing 4 always remains the same. The transmission ratio of the transmission apparatus depends on the pitch of the helix 8 in the ball lead screw 1 and nut 2 and can be varied within a wide range, for example between 1:5 and 1:50.

The general operation of a ball lead screw is assumed to be known: the displacement of the balls through the helix in the nut determines the relative rotation of the nut with respect to the lead screw. Fig. 3 and 4 show sections of the ball circulation nut 2 according to the invention, in which one can see that the nut 2 is provided with a ball return duct 11 for transferring the balls from one end of the helix 8 in the nut 2 to the other. This ball return duct is shaped so as to contain as few bends as possible, which cause friction of the balls 3. In this exemplary embodiment, the ball return duct 11 is provided with a starting tube and an end tube 12 and 13, respectively, projecting with catch noses 14 into the helix 8 for introducing and removing balls into and from the helix 8, respectively. The tubes 12 and 13 run substantially tangentially with respect to the helix 8, so that the balls hardly change of direction. Helical springs 15 and 16 link up with the tubes 12 and 13, respectively, in order to form a bend towards an intermediate tube 17 running in longitudinal direction in the nut 2. The intermediate tube 17 runs entirely in the corner of the nut 2 in which a longitudinal groove 18 is provided. The longitudinal groove 18 links up with the bores for the tubes 12 and 13 and the helical springs 15 and 16 for connection to the helix 8. The helical springs 15 and 16 can be very easily connected to the tubes 12, 13 and 17, as they can be slid onto them. In this way, the helix 8 and the ball return duct 11 can be easily filled with balls by disconnecting the intermediate tube 17 from one of the helical springs 15, 16 and introducing the balls through the intermediate tube 17, after which the tube 17 and the helical spring 15, 16 concerned can be connected to each other, and the nut can be slid into the housing 4, thus enclosing the ball return duct 11 in the longitudinal groove 18 between the nut 2 and the housing 4.

Depending on the type of fit, different materials can be used for the different parts. In embodiments that are not too heavily loaded, the nut 2 and the ball lead screw 1 can be manufactured from PETP impregnated with oil, resulting in a self-lubricating transmission. The balls 3 may be made of stainless steel and the housing 4 may consist of an aluminium extrusion profile. Other combinations of materials are of course also conceivable. The cord or the like is manufactured from a material presenting minimal elongation and wear.

The exemplary embodiment described above is in particular suitable for adjusting the side stays of a sailing boat, in which case the housing 4 of course needs to be provided with attachment points for pivotable connection to the boat. The transmission apparatus according to the invention is, however, also applicable in many other places, for example in places where pneumatic cylinders are applied as well. The advantage of the invention is that it also allows manual operation and, within a certain range of accuracy, arbitrary stop positions. The transmission apparatus according to the invention can produce more force than pneumatic cylinders having a piston diameter equal to the lead diameter, at the usual compressed air pressure. Thanks to the possibility of coupling different transmission apparatuses, the invention is also particularly suitable for horizontal lifting tables, window stays in greenhouses, and possibly also for slackening sliding formworks. In addition, applications for opening and closing large industrial doors are conceivable. It is clear that other applications can be conceived in which the apparatus is used to convert a large actuating force into a smaller working force.

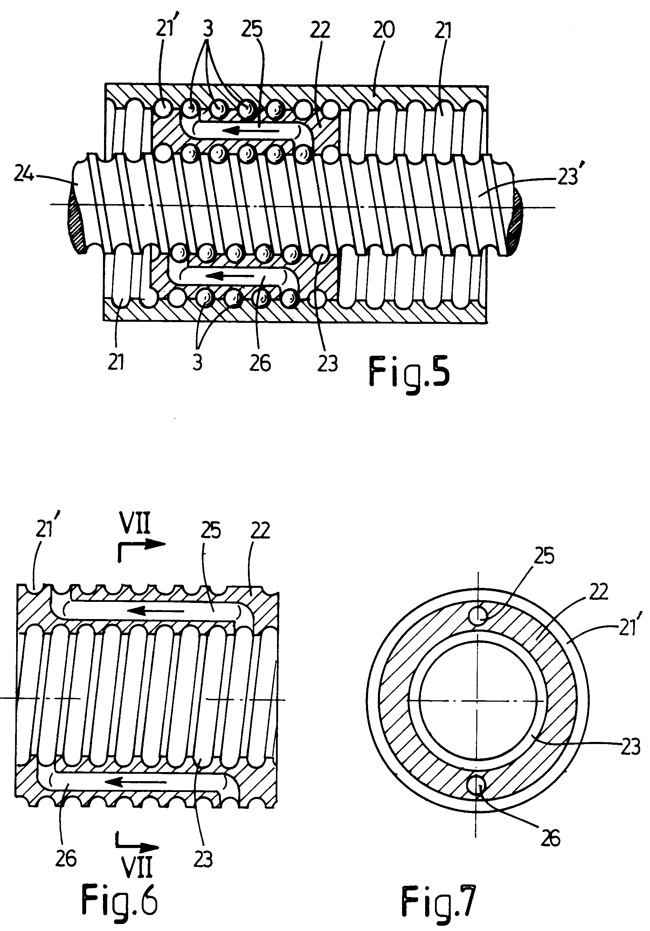

Fig. 5, 6 and 7 show a second exemplary embodiment of the invention, in which even greater transmission ratios can be obtained. This embodiment is in principle a double ball lead screw comprising three major parts with balls. These major parts are: an external nut 20 which is formed by a tube having an internal helix 21 with a substantially semicircular cross-section; a ball circulating body 22 having an external helix 21' which matches the internal helix 21 of the nut 20, and an internal helix 23 of which the pitch direction is the same as that of the helix 21; and a bolt or lead screw 24 having a helix 23' which matches the helix 23 of the ball circulating body 22 and which also has a semicircular cross-section.

The operation of this transmission apparatus is based on the principle of differential transmission, which means that the translation of the ball circulating body 22 with respect to the nut 20 is partly counteracted by the translation of that lead screw 24 with respect to the ball circulating body 22. If, for example, the nut 20 is rotated and secured against axial translation while the lead screw 24 is secured against rotation, the lead screw 24 will undergo a translation which consists of the difference between the translation of the ball circulating body 22 with respect to the nut 20 and the translation of the lead screw 24 with respect to the ball circulating body 22. It is of course also possible to secure the nut 20 against rotation and to rotate the ball circulating body 22.

The balls 3 circulate within the ball circulating body 22 between the helix 21' and the helix 23. Fig. 5-7 show internal bores 25 and 26 for guiding the balls 3 between the helix 21' and the helix 23 on the external and internal circumference of the ball circulating body 22.

Due to the principle of the ball lead screw and nut, each ball has the same angular speed, which means that all adjacent moving faces have the same speed difference. As a result of the difference in diameter between the helices 21 and 23 that function as ball tracks, the nut 20 will rotate with respect to the lead screw 24. If the helices 21 and 23 have identical pitches, the transmission ratio of the transmission apparatus is determined by the ratio of the diameters of the helices 21 and 23. By varying the pitch of the helix 21 and/or 23 as well, any transmission ratio can be realized, which is only limited by the strength of the materials used.

Any type of rotating drive can be used for driving the transmission apparatus, e.g. electromotors.

The invention is not limited to the embodiments represented in the drawings and the embodiments described in the foregoing, which can be varied in various ways within the scope of the invention. It is, for example, possible to couple the nut to the part to be adjusted, instead of the lead screw.

## Claims

1. Transmission apparatus for converting an actuating force into a greater working force, comprising elongated flexible tension means (7) which engage a rod-shaped member (1) through a transmission, **characterized in that** the rod-shaped member is formed as a ball lead screw (1), mounted rotatably around the longitudinal axis and provided with a nut (2), the tension means (7) on both sides of the nut (2) being wound into the free helices (8) of the lead screw (1), said free helices and the nut functioning as a transmission, and being guided adjacent to or within the nut, into and out of the helices (8), respectively, in such a way, that it can be subjected to a tensile force.

2. Transmission apparatus according to claim 1, in which the nut (2) is fixedly mounted.

3. Transmission apparatus according to claim 2, in which the nut (2) and a part of the ball lead screw (1) which is situated on one side of the nut (2) are accommodated in a housing (4) having an inlet and an outlet hole (9) for the tension means (7).

4. Transmission apparatus according to any of the preceding claims, in which the tension means (7) on both sides of the nut (2) are connected to each other.

5. Transmission apparatus according to claim 4, in which the tension means (7) consist of a single cord, rope, cable, chain or the like.

6. Transmission apparatus according to any of the preceding claims, in which the nut (2) has a rectangular external circumference, in particular a square one, while a ball return duct (12) of the ball circulation nut (2) is accommodated in a corner of the nut (2).

7. Transmission apparatus according to claim 6, in which the ball return duct (12) is composed of helical springs (15, 16), or the like, forming bends, and by tubes (12, 13, 17) connecting to them.

8. Transmission apparatus for converting an actuating force into a greater working force, comprising a ball lead screw (24) provided with a nut, and a drive for bringing these in rotation with respect to each other, **characterized in that** a ball circulating body (22) is provided between the nut (20) and the ball lead screw (24), having ball helices (21', 23) on the external and internal circumference, respectively for cooperation with the external nut (20) and the internal lead screw (24) through balls (3), said ball circulating body (22) comprising ball connecting ducts (25, 26) for guiding the balls (3) between the external and internal helices (21', 23), one of said external nut (20) and lead screw (24) being secured against translation and the other against rotation.

9. Transmission apparatus according to claim 8, in which the ball helices (21', 23) on the external and internal circumference have the same pitch direction.

10. Transmission apparatus according to claim 8 or 9, in which the external nut (20) is rotatably supported and connected with a rotating drive, while the internal lead screw (24) is slidable and connected with the part to be driven.
